# EUROPÄISCHE PATENTSCHRIFT

(11) **EP 3 711 469 B1**
(45) Veröffentlichungstag und Bekanntmachung des Hinweises auf die Patenterteilung: **11.10.2023**
(21) Anmeldenummer: 20401017.7
(22) Anmeldetag: 11.03.2020
(51) Int. Cl.: A01C 17/00, A01C 21/00

(54) **VERFAHREN ZUM ERMITTELN DES VERSCHMUTZUNGSZUSTANDS VON SENSOREN EINER LANDWIRTSCHAFTLICHEN STREUMASCHINE**
METHOD FOR DETERMINING THE STATE OF CONTAMINATION OF SENSORS OF AN AGRICULTURAL SPREADING MACHINE
PROCÉDÉ DE DÉTERMINATION DE L'ÉTAT D'ENCRASSEMENT DE CAPTEURS D'UN ÉPANDEUR AGRICOLE

(30) Priorität: 20.03.2019 DE 102019107082
(43) Veröffentlichungstag der Anmeldung: 23.09.2020
(73) Patentinhaber: Amazonen-Werke H. Dreyer SE & Co. KG, 49205 Hasbergen (DE)
(72) Erfinder: Wessels, Thomas, 49080 Osnabrück (DE); Große Brinkhaus, Andre, 48149 Münster (DE)

(56) Entgegenhaltungen:
- EP-A1- 3 279 398
- EP-A2- 1 275 282
- EP-A2- 2 783 560
- DE-A1- 19 723 359
- US-A1- 2018 231 449

## Beschreibung

Die Erfindung betrifft ein Verfahren zum Ermitteln des Verschmutzungszustands von Sensoren einer landwirtschaftlichen Streumaschine nach dem Oberbegriff des Patentanspruchs 1 und eine landwirtschaftliche Streumaschine nach dem Oberbegriff des Patentanspruchs 8.

Moderne landwirtschaftliche Streumaschinen, wie beispielsweise Düngerstreuer, weisen häufig Sensoren auf, über welche das Flugverhalten des abgeworfenen Streuguts erfasst werden kann. Eine derartige landwirtschaftliche Streumaschine ist beispielsweise in der Druckschrift DE 10 2013 103 060 A1 offenbart. Die EP 1 275 282 A2 offenbart eine Streumaschine zur berührungslosen Überwachung des ausgebrachten Massenstroms.

Während eines Streuvorgangs können die Sensoren entsprechender landwirtschaftlicher Streumaschinen stark verschmutzen. Die Schmutzpartikel an den Sensoren der landwirtschaftlichen Streumaschine können zu einer erheblichen Signalverfälschung führen, sodass Regelungs- oder Steuerungsroutinen, welche die Messwerte dieser Sensoren verwenden, beeinträchtigt werden. Dies gilt insbesondere bei einer ungleichmäßigen Verschmutzung der Sensoren, welche zu einer Fehlaufzeichnung des Flugverhaltens des abgeworfenen Streuguts führt.

Aus dem Stand der Technik sind bereits verschiedene Maßnahmen bekannt, um derartige Sensorverschmutzungen zu vermeiden. Beispielsweise schlägt die Druckschrift DE 10 2015 011 496 A1 die Einhausung von Sensoren vor, sodass diese vor Schmutzpartikeln geschützt werden. Die Druckschrift DE 10 2014 106 777 A1 offenbart eine Streumaschine, deren Sensoren Reinigungseinheiten zugeordnet sind, damit entsprechende Sensorverschmutzungen entfernt werden können.

Diese und andere Lösungen ermöglichen es jedoch bisher nicht, den Verschmutzungszustand der Sensoren zu erfassen, sodass eine optische Überprüfung der Sensoren durch einen Benutzer erforderlich ist.

Die der Erfindung zugrundeliegende Aufgabe besteht somit darin, die Verschmutzung von Sensoren einer landwirtschaftlichen Streumaschine, welche zum Aufzeichnen des Flugverhaltens des abgeworfenen Streuguts eingesetzt werden, technisch erfassen zu können.

Die Aufgabe wird gelöst durch ein Verfahren der eingangs genannten Art, wobei eine Auswerteeinrichtung im Rahmen des erfindungsgemäßen Verfahrens ein Auswertesignal aus den von den mehreren Sensoren aufgezeichneten Messwerten ermittelt und das Auswertesignal hinsichtlich einer Grenzwertunterschreitung zum Identifizieren einer Sensorverschmutzung überwacht.

Die Erfindung macht sich die Erkenntnis zunutze, dass die Messwerte der mehreren Sensoren untereinander in Beziehung gesetzt werden können, um Rückschlüsse auf den Verschmutzungszustand der Sensoren ziehen zu können. Insbesondere, wenn das Auswertesignal, welches aus den Messwerten der mehreren Sensoren ermittelt wird, über einen vordefinierten Zeitraum einen Grenzwert unterschreitet, ist davon auszugehen, dass zumindest einer der Sensoren verschmutzt ist. In diesem Fall können geeignete Maßnahmen zur Reinigung der Sensoren veranlasst werden, sodass eine Beeinträchtigung einer die Messwerte verwendenden Steuerung oder Regelung der landwirtschaftlichen Streumaschine verhindert wird.

Die Auswerteeinrichtung, welche das Auswertesignal ermittelt und überwacht, ist vorzugsweise Bestandteil der landwirtschaftlichen Streumaschine und signalleitend mit den mehreren Sensoren verbunden. Die landwirtschaftliche Streumaschine ist vorzugsweise ein Zweischeiben-Düngerstreuer mit zwei nebeneinander angeordneten und rotierend antreibbaren Streuscheiben. Die mehreren Sensoren können beispielsweise als Radarsensoren ausgebildet sein und entlang eines Umfangsbereichs beabstandet von den Streuscheiben der landwirtschaftlichen Streumaschine angeordnet sein. Vorzugsweise ist eine erste Gruppe von Sensoren einer ersten Streuscheibe zugeordnet, wobei eine zweite Gruppe von Sensoren einer zweiten Streuscheibe zugeordnet ist. Vorzugsweise wird ein erstes Auswertesignal aus den Messwerten der Sensoren der ersten Gruppe und ein zweites Auswertesignal aus den Messwerten der Sensoren der zweiten Gruppe ermittelt, sodass die Verschmutzungszustände der beiden Sensorgruppen unabhängig voneinander erfasst werden können.

In einer bevorzugten Ausführungsform des erfindungsgemäßen Verfahrens umfasst das Ermitteln des Auswertesignals aus den von den mehreren Sensoren aufgezeichneten Messwerten das Aufsummieren der jeweils zeitgleich von den mehreren Sensoren aufgezeichneten Messwerte zu einer Messwertsumme. Vorzugsweise wird die Messwertsumme unter Berücksichtigung der zum Aufzeichnungszeitpunkt eingestellten Ausbringmenge an Streugut oder einem maschineninternen Streugutmassenstrom zu einer normierten Messwertsumme normiert. Durch das Normieren der Messwertsumme kann der Einfluss der eingestellten Ausbringmenge auf die Sensorwerte der Sensoren ausgeglichen werden. Die Tatsache, dass bei einer hohen Ausbringmenge die aufgezeichneten Messwerte grundsätzlich höher sind als bei einer geringen Ausbringmenge, kann somit bei der folgenden Signalauswertung unberücksichtigt bleiben. Die normierte Messwertsumme kann beispielsweise durch eine Quotientenbildung aus der Messwertsumme und der Ausbringmenge an Streugut oder dem maschineninternen Streugutmassenstrom ermittelt werden. Alternativ zu dem maschineninternen Streugutmassenstrom kann auch eine die Ausbringmenge beeinflussende Maschineneinstellung, wie etwa eine Dosierschieberstellung, berücksichtigt werden. Insbesondere umfasst das Verfahren das Erzeugen eines Messwertsummensignals aus zeitlich beabstandet gebildeten Messwertsummen oder aus zeitlich beabstandet gebildeten normierten Messwertsummen. Auf Grundlage des erzeugten Messwertsummensignals kann der Verschmutzungszustand der Sensoren überwacht werden. Wenn das Messwertsummensignal aus zeitlich beabstandet gebildeten normierten Messwertsummen erzeugt wird, beeinflusst auch die Anpassung der Ausbringmenge während des Streuvorgangs, beispielsweise im Übergangsbereich zum Vorgewende, die Verschmutzungserfassung nicht.

In einer anderen bevorzugten Ausführungsform des erfindungsgemäßen Verfahrens erfolgt im Rahmen des Ermittelns des Auswertesignals aus den von den mehreren Sensoren aufgezeichneten Messwerten eine Maximalwertüberwachung des Messwertsummensignals. Vorzugsweise wird ein während der Maximalwertüberwachung erfasster Maximalwert des Messwertsummensignals als aktueller Skalierwert gespeichert. Der aktuelle Skalierwert kann sich folglich während des Streuvorgangs ändern. Sobald im Rahmen der Maximalwertüberwachung ein neuer Maximalwert des Messwertsummensignals erfasst wird, kommt es folglich zu einer Erhöhung des Skalierwerts. Eine Reduzierung des Skalierwerts ist in diesem Zusammenhang nicht möglich. Vorzugsweise umfasst das Ermitteln des Auswertesignals aus den von den mehreren Sensoren aufgezeichneten Messwerten das Skalieren des Messwertsummensignals mittels des Skalierwerts. Vorzugsweise entspricht das skalierte Messwertsummensignal dem Auswertesignal, welches im Rahmen der Verschmutzungserfassung hinsichtlich einer Grenzwertunterschreitung überwacht wird.

Im erfindungsgemäßen Verfahren sind die Sensoren als Radarsensoren ausgebildet und auf einen von der Streumaschine durch den Streugutabwurf erzeugten Streufächer ausgerichtet. Vorzugsweise sind die Sensoren von der Streuscheibe abgewandt ausgerichtet. Vorzugsweise sind die Sensoren gleichmäßig über einen Umfangsabschnitt um die Streuscheibe herum angeordnet. Beispielsweise sind die Sensoren an einer bogenförmigen Haltestrebe befestigt, welche beabstandet von der Streuscheibe angeordnet ist.

In einer anderen Ausführungsform des erfindungsgemäßen Verfahrens ist auf Grundlage der von den Sensoren aufgezeichneten Messwerte der Abwurfwinkel des Streuguts ermittelbar. Alternativ oder zusätzlich kann auf Grundlage der von den Sensoren aufgezeichneten Messwerte auch die Wurfweite des Streuguts ermittelbar sein. Somit erlauben die Sensoren die Überwachung des Abwurfwinkels und/oder der Wurfweite des abgeworfenen Streuguts, sodass eine Regelung des Abwurfwinkels und/oder der Wurfweite umsetzbar ist. Bei einer ungleichmäßigen Sensorverschmutzung kommt es zu einer Fehlaufzeichnung und/oder Fehlauswertung des Abwurfwinkels und/oder der Wurfweite, sodass die Regelung beeinträchtigt wird. Letztlich führt dies zu einer unbeabsichtigten Streugutverteilung auf der landwirtschaftlichen Nutzfläche, wodurch es zu erheblichen Ertragseinbußen kommen kann.

In einer weiteren bevorzugten Ausführungsform des erfindungsgemäßen Verfahrens wird beim Überwachen des Auswertesignals hinsichtlich der Grenzwertunterschreitung auch die Dauer der auftretenden Grenzwertunterschreitung überwacht. Kurzzeitige Grenzwertunterschreitungen sind nicht zwangsläufig mit Sensorverschmutzungen in Verbindung zu bringen. Anhaftende Regentropfen oder lediglich temporär anhaftende Schmutzpartikel führen im Regelfall lediglich zu einer kurzzeitigen und hinnehmbaren Verfälschung des aufgezeichneten Flugverhaltens des abgeworfenen Streuguts und erfordern häufig nicht die Durchführung einer Sensorreinigung. Hält die Grenzwertunterschreitung länger als eine vordefinierte Dauer an, ist von einer nicht-akzeptablen Sensorverschmutzung auszugehen und eine entsprechende Sensorreinigung zu veranlassen.

Das erfindungsgemäße Verfahren wird ferner dadurch vorteilhaft weitergebildet, dass ein Verschmutzungshinweis ausgegeben wird, wenn die Grenzwertunterschreitung länger als eine vordefinierte Dauer anhält. Alternativ oder zusätzlich umfasst das Verfahren das Ausgeben einer Aufforderung zur Durchführung einer Sensorreinigung, wenn die Grenzwertunterschreitung länger als eine vordefinierte Dauer anhält. Ferner kann eine auf den Messwerten der Sensoren basierende Steuerung und/oder Regelung des Aufgabepunkts des Streuguts auf eine Streuscheibe der landwirtschaftlichen Streumaschine selbsttätig deaktiviert werden, wenn die Grenzwertunterschreitung länger als eine vordefinierte Dauer anhält. Auf diese Weise wird eine fehlerhafte Anpassung des Aufgabepunkts des Streuguts auf die Streuscheibe der landwirtschaftlichen Streumaschine vermieden, welche zu einer unbeabsichtigten Fehlausbringung des Streuguts auf die landwirtschaftliche Nutzfläche führen würde. Alternativ oder zusätzlich umfasst das Verfahren das selbsttätige Aktivieren einer Sensorreinigungseinrichtung der landwirtschaftlichen Streumaschine durch eine Steuerungseinrichtung der landwirtschaftlichen Streumaschine, wenn die Grenzwertunterschreitung länger als eine vordefinierte Dauer anhält. Durch das selbsttätige Aktivieren einer Sensorreinigungseinrichtung ist eine manuelle Reinigung der Sensoren nicht länger erforderlich. Die Ausbringung des Streuguts wird somit insgesamt beschleunigt. Ferner wird der Benutzungskomfort der landwirtschaftlichen Streumaschine gesteigert. Das Ausgeben des Verschmutzungshinweises oder der Aufforderung zur Durchführung einer Sensorreinigung erfolgt vorzugsweise optisch und/oder akustisch, beispielsweise durch einen Informations- und/oder Bedienterminal.

Darüber hinaus ist ein erfindungsgemäßes Verfahren vorteilhaft, bei welchem ein Streugutwechsel durch die Auswerteeinrichtung erfasst wird. Im Jahresverlauf werden entsprechende landwirtschaftliche Streumaschinen zur Ausbringung unterschiedlicher Streugutsorten verwendet. Unterschiedliche Streugutsorten weisen voneinander abweichende Radarquerschnitte auf, sodass der im Rahmen der Maximalwertüberwachung ermittelte Skalierwert bei einem Wechsel des Streuguts nicht aus einer vorhergehenden Maximalwertüberwachung bei der Ausbringung eines anderen Streuguts übernommen werden darf. Mithin umfasst das Verfahren vorzugsweise das Löschen des im Rahmen einer zurückliegenden Maximalwertüberwachung gespeicherten Skalierwerts. Somit kann die Verschmutzungserfassung unabhängig von der ausgebrachten Streugutsorte erfolgen.

Die der Erfindung zugrundeliegende Aufgabe wird ferner durch eine landwirtschaftliche Streumaschine der eingangs genannten Art gelöst, wobei die erfindungsgemäße landwirtschaftliche Streumaschine eine Auswerteeinrichtung aufweist, welche dazu eingerichtet ist, ein Auswertesignal aus den von den mehreren Sensoren aufgezeichneten Messwerten zu ermitteln und das Auswertesignal hinsichtlich einer Grenzwertunterschreitung zum Identifizieren einer Sensorverschmutzung zu überwachen. Hinsichtlich der Vorteile und Modifikationen der erfindungsgemäßen landwirtschaftlichen Streumaschine wird zunächst auf die Vorteile und Modifikationen des erfindungsgemäßen Verfahrens verwiesen.

In der erfindungsgemäßen landwirtschaftlichen Streumaschine sind die Sensoren als Radarsensoren ausgebildet und auf einen von der Streumaschine durch den Streugutabwurf erzeugten Streufächer ausgerichtet. Durch die Ausrichtung der Sensoren auf den Streufächer kann beispielsweise der Abwurfwinkel und/oder die Wurfweite des Streuguts über die Sensoren ermittelt werden.

In einer anderen bevorzugten Ausführungsform der erfindungsgemäßen landwirtschaftlichen Streumaschine weist diese eine Ausgabeeinrichtung auf, welche dazu eingerichtet ist, einen Verschmutzungshinweis und/oder eine Aufforderung zur Durchführung einer Sensorreinigung auszugeben, wenn die Grenzwertunterschreitung länger als eine vordefinierte Dauer anhält. Die Ausgabeeinrichtung kann eine Anzeige- und/oder Tonwiedergabeeinrichtung umfassen und/oder als Informations- und/oder Bedienterminal ausgebildet sein.

Die landwirtschaftliche Streumaschine kann eine die Messwerte der Sensoren nutzende Steuerungs- und/oder Regelungseinrichtung zur Steuerung und/oder Regelung des Aufgabepunkts des Streuguts auf eine Streuscheibe aufweisen, wobei die Steuerungs- und/oder Regelungseinrichtung dazu eingerichtet sein kann, sich selbsttätig zu deaktivieren, wenn die Grenzwertunterschreitung eine vordefinierte Dauer anhält.

Die landwirtschaftliche Streumaschine kann ferner eine Sensorreinigungseinrichtung aufweisen, wobei die Sensorreinigungseinrichtung vorzugsweise dazu eingerichtet ist, sich selbsttätig zu aktivieren, wenn die Grenzwertunterschreitung länger als eine vordefinierte Dauer anhält.

In einer weiteren bevorzugten Ausführungsform ist die erfindungsgemäße landwirtschaftliche Streumaschine dazu eingerichtet, das Verfahren zum Ermitteln des Verschmutzungszustands von Sensoren nach einer der vorstehend beschriebenen Ausführungsformen auszuführen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen landwirtschaftlichen Streumaschine in einer schematischen Darstellung; und
- Fig. 2: ein schematisches Ablaufdiagramm eines Ausführungsbeispiels des erfindungsgemäßen Verfahrens.

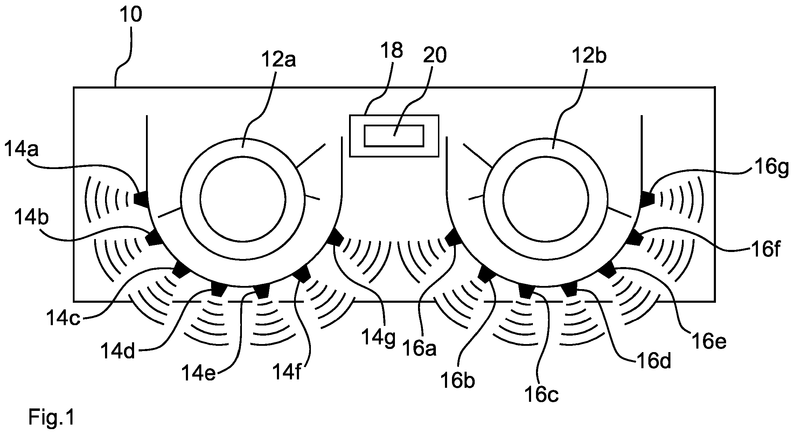

Die Fig. 1 zeigt eine als Zweischeiben-Düngersteuer ausgebildete landwirtschaftliche Streumaschine 10. Die landwirtschaftliche Streumaschine 10 umfasst zwei nebeneinander angeordnete und rotierend antreibbare Streuscheiben 12a, 12b. Über ein steuerbares Streuguteinleitsystem lässt sich die Menge und der Aufgabepunkt des auf die Streuscheiben 12a, 12b aufgegebenen Streuguts einstellen.

Die landwirtschaftliche Streumaschine 10 verfügt über eine Aufgabepunkt-Regelung, mittels welcher während des Streuvorgangs der Aufgabepunkt des Streuguts auf die Streuscheiben 12a, 12b geregelt wird. Über den Aufgabepunkt des Streuguts auf die Streuscheiben 12a, 12b kann der Abwurfwinkel des Streuguts von den Streuscheiben 12a, 12b eingestellt werden. Die Aufgabepunkt-Regelung sorgt dafür, dass das Streugut während des Streuvorgangs stets mit einem geeigneten Abwurfwinkel auf die landwirtschaftliche Nutzfläche abgeworfen wird. Auf diese Weise kann eine gewünschte, insbesondere gleichmäßige, Querverteilung des Streuguts auf der landwirtschaftlichen Nutzfläche erreicht werden.

Die Aufgabepunkt-Regelung verwendet Messwerte, welche von Sensoren 14a-14g, 16a-16g aufgezeichnet werden. Die Sensoren 14a-14g, 16a-16g sind als Radarsensoren ausgebildet. Die Sensoren 14a-14g sind derart angeordnet und ausgerichtet, dass diese den durch den Streugutabwurf der Streuscheibe 12a erzeugten Streufächer erfassen. Die Sensoren 16a-16g sind derart angeordnet und ausgerichtet, dass diese den durch den Streugutabwurf der Streuscheibe 12b erzeugten Streufächer erfassen.

Über die Streufächererfassung kann der Abwurfwinkel des Streuguts ermittelt werden. Die Aufgabepunkt-Regelung wird über die Steuerungs- und Regelungseinrichtung 18 der landwirtschaftlichen Streumaschine 10 umgesetzt, welche mit den Sensoren 14a-14g, 16a-16g signalleitend verbunden ist.

Die Steuerungs- und Regelungseinrichtung 18 weist ferner eine Auswerteeinrichtung 20 auf, welche dazu eingerichtet ist, ein erstes Auswertesignal zu ermitteln, über welches eine Verschmutzung der Sensoren 14a-14g festgestellt werden kann, und ein zweites Auswertesignal zu ermitteln, über welches die Verschmutzung der Sensoren 16a-16g festgestellt werden kann. Die Auswertesignale werden dabei aus den Messwerten ermittelt, welche die Sensoren 14a-14g, 16a-16g aufzeichnen. Zum Identifizieren einer Sensorverschmutzung werden die Auswertesignale durch die Auswerteeinrichtung 20 hinsichtlich einer Grenzwertunterschreitung überwacht.

Wenn eine entsprechende Grenzwertunterschreitung eines Auswertesignals festgestellt wird und diese Grenzwertunterschreitung länger als eine vorbestimmte Dauer anhält, wird über eine Anzeige- oder Tonwiedergabeeinrichtung ein Verschmutzungshinweis ausgegeben, welcher den Benutzer der landwirtschaftlichen Streumaschine 10 darauf hinweist, dass die Sensoren 14a-14g oder die Sensoren 16a-16g verschmutzt sind. Beispielsweise erfolgt die Ausgabe des Verschmutzungshinweises über ein Bedienterminal. Zusätzlich zu dem Verschmutzungshinweis kann der Benutzer zur Durchführung einer Sensorreinigung aufgefordert werden.

Eine entsprechende Sensorreinigung ist bei verschmutzten Sensoren 14a-14g, 16a-16g notwendig, damit das von den Sensoren 14a-14g, 16a-16g aufgezeichnete Flugverhalten nicht fehlerhaft erfasst wird. Eine fehlerhafte Erfassung des Flugverhaltens des abgeworfenen Streuguts würde beispielsweise die Aufgabepunkt-Regelung beeinträchtigen, sodass es zu einer nicht-akzeptablen Streugutverteilung auf der landwirtschaftlichen Nutzfläche kommt.

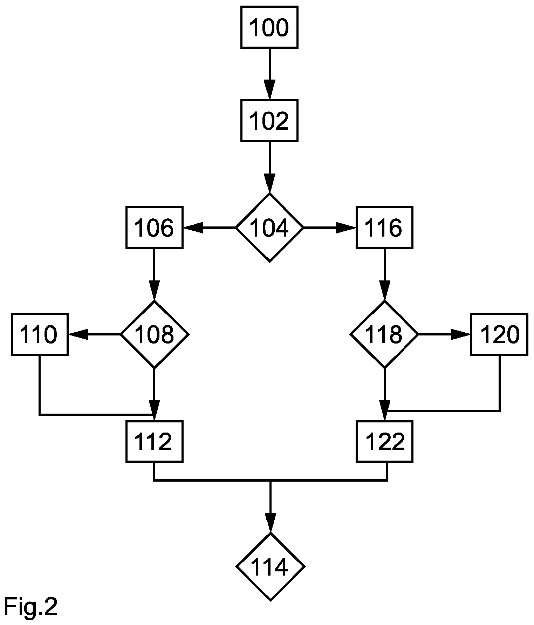

Die Fig. 2 zeigt schematisch den Verfahrensablauf zum Ermitteln der Sensorverschmutzung. Der dargestellte Verfahrensablauf wird für beide Sensorgruppen, also die Sensoren 14a-14g und die Sensoren 16a-16g, separat und unabhängig voneinander ausgeführt. Nachfolgend wird das Verfahren beispielhaft für die Sensoren 14a-14g aus der Fig. 1 beschrieben.

Dem dargestellten Verfahrensablauf wird zugrunde gelegt, dass die landwirtschaftliche Streumaschine 10 während des Ausführens des Streuvorgangs Messwerte über die Sensoren 14a-14g aufzeichnet, welche das Flugverhalten des abgeworfenen Streuguts betreffen. Zur Ermittlung eines Auswertesignals aus den von den Sensoren 14a-14g aufgezeichneten Messwerten werden im Schritt 100 zunächst die jeweils zeitgleich von den Sensoren 14a-14g aufgezeichneten Messwerte zu einer Messwertsumme aufsummiert. Nach dem Aufsummieren der Messwerte erfolgt im Schritt 102 ein Normieren der Messwertsumme zu einer normierten Messwertsumme unter Berücksichtigung des zum Aufzeichnungszeitpunkt vorliegenden maschineninternen Streugutmassenstroms. Der Schritt 102 umfasst ebenfalls das Erzeugen eines Messwertsummensignals aus zeitlich beabstandet gebildeten normierten Messwertsummen.

Im Schritt 104 wird geprüft, ob die Streugutausbringung aktuell in einem Normalstreumodus oder einem Grenzstreumodus erfolgt. Wenn die Streugutausbringung in einem Normalstreumodus erfolgt, wird das Messwertsummensignal im Schritt 106 zunächst gefiltert. Im Schritt 108 wird eine Maximalwertüberwachung des Messwertsummensignals ausgeführt, wobei im Schritt 110 ein während der Maximalwertüberwachung erfasster Maximalwert des Messwertsummensignals als aktueller Skalierwert gespeichert wird.

Im Schritt 112 erfolgt das Skalieren des Messwertsummensignals mittels des aktuellen Skalierwerts. Das sich ergebende skalierte Messwertsummensignal entspricht dem Auswertesignal, welches zur Verschmutzungserfassung im Schritt 114 überwacht wird. Zum Identifizieren einer Sensorverschmutzung wird das Auswertesignal hinsichtlich einer Grenzwertunterschreitung überwacht. Bei einer über einen vordefinierten Zeitraum anhaltenden Grenzwertunterschreitung des Auswertesignals ist davon auszugehen, dass zumindest einer der Sensoren 14a-14g verschmutzt ist.

Falls im Schritt 104 festgestellt wird, dass die Streugutausbringung in einem Grenzstreumodus erfolgt, wird das Messwertsummensignal im Schritt 116 zunächst mit einer alternativen Filterroutine gefiltert. Im Übrigen entspricht die Verschmutzungserfassung im Grenzstreumodus der Verschmutzungserfassung im Normalstreumodus. Im Schritt 118 wird wieder eine Maximalwertüberwachung des Messwertsummensignals ausgeführt, wobei ein während der Maximalwertüberwachung erfasster Maximalwert des Messwertsummensignals im Schritt 120 als aktueller Skalierwert gespeichert wird. Im Schritt 122 wird das Messwertsummensignal mittels des aktuellen Skalierwerts skaliert. Das skalierte Messwertsummensignal entspricht wieder dem Auswertesignal, welches im Schritt 114 hinsichtlich einer Grenzwertunterschreitung überwacht wird.

Wenn im Schritt 114 eine Sensorverschmutzung erfasst wird, erfolgt die Ausgabe eines Verschmutzungshinweises und die Aufforderung zur Durchführung einer Sensorreinigung über ein Bedienterminal, welches signalleitend mit der Auswerteeinrichtung 20 verbunden ist. Alternativ zur Ausgabe eines Verschmutzungshinweises und/oder einer Aufforderung zur Durchführung einer Sensorreinigung kann die Steuerungseinrichtung 18 das Aktivieren einer Sensorreinigungseinrichtung der landwirtschaftlichen Streumaschine 10 veranlassen. In diesem Fall ist keine manuelle Reinigung der Sensoren 14a-14g erforderlich.

### Bezugszeichen

- 10: Streumaschine
- 12a, 12b: Streuscheiben
- 14a-14g: Sensoren
- 16a-16g: Sensoren
- 18: Steuerungs- und Regelungseinrichtung
- 20: Auswerteeinrichtung

- 100-122: Verfahrensschritte

## Patentansprüche

1. Verfahren zum Ermitteln des Verschmutzungszustands von Sensoren (14a-14g, 16a-16g) einer landwirtschaftlichen Streumaschine (10), mit den Schritten: dem
- Aufzeichnen von Messwerten durch mehrere Sensoren (14a-14g, 16a-16g) einer landwirtschaftlichen Streumaschine (10), wobei die Messwerte das Flugverhalten des abgeworfenen Streuguts betreffen;
- Ermitteln eines Auswertesignals aus den von den mehreren Sensoren (14a-14g, 16a-16g) aufgezeichneten Messwerten durch eine Auswerteeinrichtung (20); und **gekennzeichnet durch** den Schritt:
- Überwachen des Auswertesignals hinsichtlich einer Grenzwertunterschreitung zum Identifizieren einer Sensorverschmutzung durch die Auswerteeinrichtung (20);
wobei die Sensoren (14a-14g, 16a-16g) als Radarsensoren ausgebildet und auf einen von der Streumaschine (10) durch den Streugutabwurf erzeugten Streufächer ausgerichtet sind.

2. Verfahren nach Anspruch 1,
**dadurch gekennzeichnet, dass** das Ermitteln des Auswertesignals aus den von den mehreren Sensoren (14a-14g, 16a-16g) aufgezeichneten Messwerten zumindest einen der folgenden Schritte umfasst:
- Aufsummieren der jeweils zeitgleich von den mehreren Sensoren (14a-14g, 16a-16g) aufgezeichneten Messwerte zu einer Messwertsumme;
- Normieren der Messwertsumme zu einer normierten Messwertesumme unter Berücksichtigung der zum Aufzeichnungszeitpunkt eingestellten Ausbringmenge an Streugut oder einem maschineninternen Streugutmassenstrom;
- Erzeugen eines Messwertsummensignals aus zeitlich beabstandet gebildeten Messwertsummen oder aus zeitlich beabstandet gebildeten normierten Messwertsummen.

3. Verfahren nach Anspruch 2,
**dadurch gekennzeichnet, dass** das Ermitteln des Auswertesignals aus den von den mehreren Sensoren (14a-14g, 16a-16g) aufgezeichneten Messwerten zumindest einen der folgenden Schritte umfasst:
- Ausführen einer Maximalwertüberwachung des Messwertsummensignals;
- Speichern eines während der Maximalwertüberwachung erfassten Maximalwerts des Messwertsummensignals als aktuellen Skalierwert;
- Skalieren des Messwertsummensignals mittels des Skalierwerts.

4. Verfahren nach einem der vorstehenden Ansprüche,
**dadurch gekennzeichnet, dass** auf Grundlage der von den Sensoren (14a-14g, 16a-16g) aufgezeichneten Messwerte der Abwurfwinkel des Streuguts ermittelbar ist.

5. Verfahren nach einem der vorstehenden Ansprüche,
**dadurch gekennzeichnet, dass** beim Überwachen des Auswertesignals hinsichtlich der Grenzwertunterschreitung auch die Dauer einer auftretenden Grenzwertunterschreitung überwacht wird.

6. Verfahren nach einem der vorstehenden Ansprüche;
**gekennzeichnet durch** zumindest einen der folgenden Schritte:
- Ausgeben eines Verschmutzungshinweises, wenn die Grenzwertunterschreitung länger als eine vordefinierte Dauer anhält;
- Ausgeben einer Aufforderung zur Durchführung einer Sensorreinigung, wenn die Grenzwertunterschreitung länger als eine vordefinierte Dauer anhält;
- selbsttätiges Deaktivieren einer auf den Messwerten der Sensoren (14a-14g, 16a-16g) basierenden Steuerung und/oder Regelung des Aufgabepunkts des Streuguts auf eine Streuscheibe (12a, 12b) der landwirtschaftlichen Streumaschine (10), wenn die Grenzwertunterschreitung länger als eine vordefinierte Dauer anhält;
- selbsttätiges Aktivieren einer Sensorreinigungseinrichtung der landwirtschaftlichen Streumaschine (10) durch eine Steuerungseinrichtung (18) der landwirtschaftlichen Streumaschine (10), wenn die Grenzwertunterschreitung eine vordefinierte Dauer anhält.

7. Verfahren nach einem der vorstehenden Ansprüche,
**gekennzeichnet durch** zumindest einen der folgenden Schritte:
- Erfassen eines Streugutwechsels durch die Auswerteeinrichtung (20);
- Löschen des im Rahmen einer zurückliegenden Maximalwertüberwachung gespeicherten Skalierwerts.

8. Landwirtschaftliche Streumaschine (10), mit
- mehreren Sensoren (14a-14g, 16a-16g), welche dazu eingerichtet sind, Messwerte aufzuzeichnen, welche das Flugverhalten des abgeworfenen Streuguts betreffen;
**gekennzeichnet durch** Sensoren (14a-14g, 16a-16g), welche als Radarsensoren ausgebildet und auf einen von der Streumaschine (10) durch den Streugutabwurf erzeugten Streufächer ausgerichtet sind, und durch eine Auswerteeinrichtung (20), welche dazu eingerichtet ist, ein Auswertesignal aus den von den mehreren Sensoren (14a-14g, 16a-16g) aufgezeichneten Messwerten zu ermitteln und das Auswertesignal hinsichtlich einer Grenzwertunterschreitung zum Identifizieren einer Sensorverschmutzung zu überwachen.

9. Landwirtschaftliche Streumaschine (10) nach Anspruch 8,
**dadurch gekennzeichnet, dass** die Sensoren (14a-14g, 16a-16g) als Radarsensoren ausgebildet sind und/oder auf einen von der Streumaschine (10) durch den Streugutabwurf erzeugten Streufächer ausgerichtet sind.

10. Landwirtschaftliche Streumaschine (10) nach Anspruch 8 oder 9,
**gekennzeichnet durch** eine Ausgabeeinrichtung, welche dazu eingerichtet ist, einen Verschmutzungshinweis und/oder eine Aufforderung zur Durchführung einer Sensorreinigung auszugeben, wenn die Grenzwertunterschreitung länger als eine vordefinierte Dauer anhält.

11. Landwirtschaftliche Streumaschine (10) nach einem der Ansprüche 8 bis 10,
**dadurch gekennzeichnet, dass** die landwirtschaftliche Streumaschine (10) dazu eingerichtet ist, das Verfahren zum Ermitteln des Verschmutzungszustands von Sensoren (14a-14g, 16a-16g) nach einem der Ansprüche 1 bis 8 auszuführen.

## Claims

1. Method for determining the contamination state of sensors (14a-14g, 16a-16g) of an agricultural spreader (10), comprising the steps of:
- recording measured values by a plurality of sensors (14a-14g, 16a-16g) of an agricultural spreader (10), the measured values relating to flight behavior of the ejected spreading material,
- determining, by means of an evaluation device (20), an evaluation signal from the measured values recorded by the plurality of sensors (14a-14g, 16a-16g); and **characterized by** the step of:
- monitoring the evaluation signal, by means of the evaluation device (20), with respect to a threshold value not being met in order to identify sensor contamination;
the sensors (14a-14g, 16a-16g) being designed as radar sensors and being aligned with a spreading fan pattern produced by the spreader (10) by the ejection of the spreading material.

2. Method according to claim 1,
**characterized in that** determining the evaluation signal from the measured values recorded by the plurality of sensors (14a-14g, 16a-16g) comprises at least one of the following steps:
- adding up the measured values recorded at the same time by the plurality of sensors (14a-14g, 16a-16g) to form a measured-value sum;
- standardizing the measured-value sum to a standardized measured-value sum, taking into account the application quantity of spreading material or an in-machine spreading-material flow set at the recording time;
- generating a measured-value sum signal from measured-value sums formed at intervals or standardized measured-value sums formed at intervals.

3. Method according to claim 2,
**characterized in that** determining the evaluation signal from the measured values recorded by the plurality of sensors (14a-14g, 16a-16g) comprises at least one of the following steps:
- carrying out maximum-value monitoring of the measured-value sum signal;
- storing a maximum value of the measured-value sum signal detected during the maximum-value monitoring process as the current scaling value;
- scaling the measured-value sum signal by means of the scaling value.

4. Method according to any of the preceding claims,
**characterized in that** the ejection angle of the spreading material can be determined on the basis of the measured values recorded by the sensors (14a-14g, 16a-16g).

5. Method according to any of the preceding claims,
**characterized in that,** when monitoring the evaluation signal with respect to the threshold value not being met, the duration of an occurrence of a threshold value not being met is also monitored.

6. Method according to any of the preceding claims,
**characterized by** at least one of the following steps:
- outputting a contamination warning if the occurrence of the threshold value not being met lasts longer than a predefined duration;
- outputting a request to perform sensor cleaning if the occurrence of the threshold value not being met lasts longer than a predefined duration;
- automatically deactivating open-loop and/or closed-loop control of the feed point of the spreading material onto a spreader disk (12a, 12b) of the agricultural spreader (10), which control is based on the measured values of the sensors (14a-14g, 16a-16g), if the occurrence of the threshold value not being met lasts longer than a predefined duration;
- automatically activating a sensor cleaning device of the agricultural spreader (10) by means of a control device (18) of the agricultural spreader (10) if the occurrence of the threshold value not being met lasts for a predefined duration.

7. Method according to any of the preceding claims,
**characterized by** at least one of the following steps:
- detecting a spreading-material change by the evaluation device (20);
- deleting the scaling value stored in the context of a recent maximum-value monitoring process.

8. Agricultural spreader (10), comprising
- a plurality of sensors (14a-14g, 16a-16g), which are designed to record measured values relating to the flight behavior of the ejected spreading material;
**characterized by** sensors (14a-14g, 16a-16g), which are designed as radar sensors and are aligned with a spreading fan pattern produced by the spreader (10) by the spreading material ejection, and by an evaluation device (20), which is designed to determine an evaluation signal from the measured values recorded by the plurality of sensors (14a-14g, 16a-16g) and to monitor the evaluation signal with respect to a threshold value not being met in order to identify sensor contamination.

9. Agricultural spreader (10) according to claim 8, **characterized in that** the sensors (14a-14g, 16a-16g) are designed as radar sensors and/or are aligned with a spreading fan pattern produced by the spreader (10) by the spreading-material ejection.

10. Agricultural spreader (10) according to claim 8 or 9, **characterized by** an output device, which is designed to output a contamination warning and/or a request to perform sensor cleaning if the occurrence of the threshold value not being met lasts longer than a predefined duration.

11. Agricultural spreader (10) according to any of claims 8 to 10,
**characterized in that** the agricultural spreader (10) is designed to carry out the method for determining the contamination state of sensors (14a-14g, 16a-16g) according to any of claims 1 to 8.

## Revendications

1. Procédé permettant de déterminer l'état d'encrassement de capteurs (14a-14g, 16a-16g) d'une machine d'épandage (10) agricole, comportant les étapes suivantes :
- enregistrement de valeurs mesurées par plusieurs capteurs (14a-14g, 16a-16g) d'une machine d'épandage (10) agricole, dans lequel les valeurs mesurées concernent le comportement en vol du produit à épandre éjecté ;
- détermination d'un signal d'évaluation, à partir des valeurs mesurées enregistrées par les capteurs (14a-14g, 16a-16g), par un dispositif d'évaluation (20) ; et **caractérisé par** l'étape suivante :
- surveillance du signal d'évaluation en ce qui concerne une non-atteinte de la valeur limite pour l'identification d'un encrassement de capteur par le dispositif d'évaluation (20) ;
dans lequel les capteurs (14a-14g, 16a-16g) sont réalisés en tant que capteurs radar et orientés vers un compartiment d'épandage de la machine d'épandage (10) généré par l'éjection de produit à épandre.

2. Procédé selon la revendication 1,
**caractérisé en ce que** la détermination du signal d'évaluation à partir des valeurs mesurées enregistrées par les capteurs (14a-14g, 16a-16g) comprend au moins l'une des étapes suivantes :
- addition des valeurs mesurées enregistrées respectivement simultanément par les capteurs (14a-14g, 16a-16g) en une somme de valeurs mesurées ;
- normalisation de la somme de valeurs mesurées en une somme de valeurs mesurées normalisée en tenant compte de la quantité d'épandage de produit à épandre, réglée au moment de l'enregistrement, ou d'un flux massique de produit à épandre interne à la machine ;
- génération d'un signal de somme de valeurs mesurées à partir de sommes de valeurs mesurées formées de manière espacée dans le temps ou de sommes de valeurs mesurées normalisées formées de manière espacée dans le temps.

3. Procédé selon la revendication 2,
**caractérisé en ce que** la détermination du signal d'évaluation à partir des valeurs mesurées enregistrées par les capteurs (14a-14g, 16a-16g) comprend au moins l'une des étapes suivantes :
- exécution d'une surveillance de valeur maximale du signal de somme de valeurs mesurées ;
- mémorisation d'une valeur maximale du signal de somme de valeurs mesurées détectée pendant la surveillance de valeur maximale en tant que valeur de mise à l'échelle réelle ;
- mise à l'échelle du signal de somme de valeurs mesurées à l'aide de la valeur de mise à l'échelle.

4. Procédé selon l'une des revendications précédentes,
**caractérisé en ce que,** sur la base des valeurs mesurées enregistrées par les capteurs (14a-14g, 16a-16g), l'angle d'éjection du produit à épandre peut être déterminé.

5. Procédé selon l'une des revendications précédentes,
**caractérisé en ce que,** lors de la surveillance du signal d'évaluation en ce qui concerne la non-atteinte de la valeur limite, la durée d'une non-atteinte de la valeur limite survenue est également surveillée.

6. Procédé selon l'une des revendications précédentes,
**caractérisé par** au moins l'une des étapes suivantes :
- émission en sortie d'une indication d'encrassement lorsque la non-atteinte de la valeur limite dure plus longtemps qu'une durée prédéfinie ;
- émission en sortie d'une invitation à effectuer un nettoyage de capteur lorsque la non-atteinte de la valeur limite dure plus longtemps qu'une durée prédéfinie ;
- désactivation automatique d'une commande et/ou d'une régulation, basées sur les valeurs mesurées des capteurs (14a-14g, 16a-16g), du point d'alimentation du produit à épandre sur un disque d'épandage (12a, 12b) de la machine d'épandage (10) agricole lorsque la non-atteinte de la valeur limite dure plus longtemps qu'une durée prédéfinie ;
- activation automatique d'un dispositif de nettoyage de capteur de la machine d'épandage (10) agricole par un dispositif de commande (18) de la machine d'épandage (10) agricole lorsque la non-atteinte de la valeur limite dure le temps d'une durée prédéfinie.

7. Procédé selon l'une des revendications précédentes,
**caractérisé par** au moins l'une des étapes suivantes :
- détection d'un changement de produit à épandre par le dispositif d'évaluation (20) ;
- suppression de la valeur de mise à l'échelle mémorisée dans le cadre d'une surveillance de valeur maximale passée.

8. Machine d'épandage (10) agricole, comportant
- plusieurs capteurs (14a-14g, 16a-16g) qui sont configurés pour enregistrer des valeurs mesurées concernant le comportement en vol du produit à épandre éjecté ;
**caractérisée par** des capteurs (14a-14g, 16a-16g), lesquels sont réalisés en tant que capteurs radar et orientés vers un compartiment d'épandage de la machine d'épandage (10) généré par l'éjection de produit à épandre, et par un dispositif d'évaluation (20), lequel est configuré pour déterminer un signal d'évaluation à partir des valeurs mesurées enregistrées par les capteurs (14a-14g, 16a-16g) et pour surveiller le signal d'évaluation en ce qui concerne une non-atteinte de la valeur limite pour l'identification d'un encrassement de capteur.

9. Machine d'épandage (10) agricole selon la revendication 8,
**caractérisée en ce que** les capteurs (14a-14g, 16a-16g) sont réalisés en tant que capteurs radar et/ou sont orientés vers un compartiment d'épandage de la machine d'épandage (10) généré par l'éjection de produit à épandre.

10. Machine d'épandage (10) agricole selon la revendication 8 ou 9,
**caractérisée par** un dispositif de sortie configuré pour émettre en sortie une indication d'encrassement et/ou une invitation à effectuer un nettoyage de capteur lorsque la non-atteinte de la valeur limite dure plus longtemps qu'une durée prédéfinie.

11. Machine d'épandage (10) agricole selon l'une des revendications 8 à 10,
**caractérisée en ce que** la machine d'épandage (10) agricole est configurée pour exécuter le procédé permettant la détermination de l'état d'encrassement de capteurs (14a-14g, 16a-16g) selon l'une des revendications 1 à 8.
